# EUROPEAN PATENT APPLICATION

(11) **EP 1 501 140 A1**
(43) Date of publication of application: **26.01.2005**
(21) Application number: 02724690.9
(22) Date of filing: 02.05.2002
(51) Int. Cl.: H01M 8/02, C09K 5/08

(54) **COOLING LIQUID COMPOSITION FOR FUEL CELL**

(71) Applicant: Shishiai-Kabushikigaisha, Seki-shi, Gifu 501-3923 (JP)
(72) Inventor: EGAWA, Hiroshi, Seki-shi, Gifu 501-3923 (JP); ITO, Naoshi, Seki-shi, Gifu 501-3923 (JP)
(74) Representative: Torggler, Paul Norbert, Dr.
(86) International application number: PCT/JP2002/004413
(87) International publication number: WO 2003/094271

(57) **Abstract**

The present invention relates to a coolant composition used for cooling a fuel cell, in particular to a coolant composition used for cooling a fuel cell having low conductivity, anti-freeze properties, and excellent anti-corrosion properties for a metal, especially an aluminum based material, for use in the cooling system of fuel cell and, further, exhibiting no significant increase in conductivity even after long term use. The coolant composition according to the invention is characterized by comprising a base agent and an additive for sustaining low conductivity of the coolant composition, the anti-corrosive additive being such a substance as suppressing oxidation of the basic agent or blocking ions eluting into a cooling system to prevent conductivity of the coolant composition from increasing.

## Description

### Technical Field

The present invention relates to a coolant composition for cooling a fuel cell, particularly a fuel cell for an automobile. In particular, the invention relates to a coolant composition for a fuel cell that sustains low conductivity of the coolant composition over a long period of time and, at the same time, is excellent in anti-freeze properties and anti-corrosion properties.

### Background Art

A fuel cell is generally constituted as a stack having a construction of stacking many single cells, which is a unit of electric power generation. Since the stack generates heat during electric power generation, a cooling plate is inserted every several cells for cooling the stack.

In the cooling plate, a path for a coolant is formed to cool the stack by allowing the coolant to flow through the path.

Thus, the coolant for a fuel cell cools the stack by circulating in the stack that is carrying out electric power generation. Therefore, when the coolant has a high electric conductivity, electricity generated in the stack flows to the coolant side to loss the electricity, resulting in decreasing power generating capacity in the fuel cell.

By reason of the fact, pure water was used as a coolant for a conventional fuel cell, which has a low electrical conductivity or a high electrical insulation.

However, in the case of an intermittently operated-type fuel cell, for example a fuel cell for an automobile and the like, the temperature of the coolant goes down to the ambient temperature during non-operation. Particularly, if a fuel cell is used at a temperature of the freezing point or less, pure water freezes and cell properties of the fuel cell might be impaired such as damage of the cooling plate due to volume expansion of the cooling water.

Further, when a cooling system for a fuel cell for an automobile and the like is considered, aluminum based materials are expected to be used for a cooling plate, a heat exchanger and the like from the view point of weight saving. But, aluminum based materials are poor in anti-corrosion properties and generate corrosion readily. Generation of corrosion leads to an increase in conductivity.

Under the circumstances, a coolant for a fuel cell, particularly a fuel cell for an automobile, is required of a low electrical conductivity, anti-freeze properties and anti-corrosion properties.

The present inventors have made hard studies on a coolant composition for a fuel cell that can answer the above requirement to result in achieving the invention.

That is, the invention intends to provide a coolant composition for a fuel cell that sustains a low electrical conductivity of the coolant composition over a long period of time and, at the same time, is excellent in anti-freeze properties and anti-corrosion properties.

### Disclosure of the Invention

Hereinafter, the coolant composition for a fuel cell (hereinafter, simply referred to as the composition) according to the invention will be described in more detail. The composition according to the invention comprises a base agent and an anti-corrosive additive. As for the base agent, one having a low electrical conductivity and anti-freeze properties is desirable. Specifically, those consisting of one or two or more kinds that are selected from water, glycols, alcohols and glycol ethers are preferable.

Examples of glycols can include those consisting of one or two or more kinds that are selected from ethylene glycol, diethylene glycol, triethylene glycol, propylene glycol, 1,3-propanediol, 1,3-butanediol, 1,5-pentanediol and hexylene glycol.

Examples of alcohols can include those consisting of one or two or more kinds that are selected from methanol, ethanol, propanol, butanol, pentanol, hexanol, heptanoland octanol.

Examples of glycol ethers can include those consisting of one or two or more kinds that are selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether.

The anti-corrosive additive according to the invention is intended to sustain conductivity of the composition, when it is added in the base agent, at a level (a low conductivity) that does not decrease the power generating capacity in the fuel cell. Specifically, when the anti-corrosive additive is added in the base agent, conductivity of the composition is sustained at 10 µS/cm or less. In addition, the anti-corrosive additive sustains variations of conductivity of the composition due to a long term use in a range of from 0 to 10 µS/cm even when it is used over a long period of time.

The anti-corrosive additive is such a substance as suppressing oxidation of the base agent to prevent electrical conductivity of the coolant composition from increasing, or such a substance as blocking ions eluting into a cooling system to prevent electrical conductivity of the coolant composition from increasing.

Examples of substances that suppress oxidation of the base agent to prevent electrical conductivity of the coolant composition from increasing can include phenolic compounds consisting of one or two or more kinds that are selected from phenol sulfonic acid, chlorophenol, nitrophenol, bromophenol, aminophenol, dihydroxybenzene, oxin, hydroxyacetophenone, methoxyphenol, 2,6-di-tert-butyl-p-cresol, tert-butyl-4-methoxyphenol, 2,6-di-tert-butyl-4-ethylphenol, 4,4-butylidenebis (3-methyl-6-tert-butylphenol), 2,2-methylenebis (4-methyl-6-tert-butylphenol) and 2,2-bis (p-hydroxyphenyl) propane.

Examples of substances that block ions to prevent conductivity of the coolant composition from increasing can include any of hydrocarbon carbonyl compounds, amide compounds, imide compounds and diazole compounds.

Examples of hydrocarbon carbonyl compounds can include those consisting of one or two or more kinds that are selected from 2,4-pentanedione, 3-methyl-2,4-pentanedione, 3-ethyl-2,4-pentanedione, 3-propyl-2,4-pentanedione, 3-n-butyl-2,4-pentanedione, 2,3-heptanedione, 2,5-hexanedione, phthalic aldehyde, benzaldehyde, dihydroxybenzaldehyde, pentanone, 2-acetylcyclopentanone, cyclohexanone, cyclohexanedione and 2,2,6,6-tetramethyl-3,5-heptanedione.

Examples of amide compounds can include those consisting of one or two or more kinds that are selected from benzamide, methylbenzamide, nicotinic acid amide, picolinic acid amide, anthranilamide, succinic acid amide, oxalic acid diamide, acetamide, 2-pyrrolidone and caprolactam.

Examples of imide compounds can include those consisting of one or two or more kinds that are selected from succinic acid imide, phthalic acid imide, maleic acid imide, glutaric acid imide, 1,8-naphthalimide, alloxane and purpuric acid.

Examples of diazole compounds can include those consisting of one or two or more kinds that are selected from imidazoline, 1,3-diazole, mercaptoimidazoline, mercaptoimidazole, benzimidazole, mercaptobenzimidazole, methylimidazole, dimethylimidazole, imidazole-4,5-dicarboxylic acid, 1,2-diazole and methylpyrazole.

As for content of the anti-corrosive additive, a desirable range is from 0.001 to 10.0 % by weight relative to the base agent. Content of the anti-corrosive additive less than the above-mentioned range can not give sufficient rust-inhibiting properties, and content of the anti-corrosive additive more than the above-mentioned range does not give an effect caused by an additional content to be uneconomic.

In this connection, the composition according to the invention may be allowed to contain, for example, an antifoaming agent, coloring agent or the like, or use other conventionally publicly known anti-corrosive additives such as molybdates, tungstates, sulfates, nitrates and benzoates at the same time in a range that does not hinder the low electrical conductivity of the composition, in addition to the aforementioned components.

### Examples

Hereinafter, the composition according to the invention will be explained in more detail by means of Examples. In Table 1 below, examples 1 to 6 are listed as preferable Examples of the composition, and, for the purpose of comparison, Comparative example 1 in which only ion-exchanged water is used according to a conventional technique, Comparative example 2 in which ion-exchanged water is used as a base agent to which ethylene glycol is added in order to give it anti-freeze properties, and Comparative example 3 in which triethanolamine is added to Comparative example 2 as a publicly known anti-corrosive additive are listed.

**Table 1**

| Component | Example 1 | Example 2 | Example 3 | Example 4 | Example 5 | Example 6 | Comparative example 1 | Comparative example 2 | Comparative example 3 |
|---|---|---|---|---|---|---|---|---|---|
| Ethylene glycol | ― | ― | 50 | 50 | 50 | 50 | ― | 50 | 50 |
| Ion-exchanged water | 30 | ― | 50 | 50 | 50 | 50 | 100 | 50 | 50 |
| Diethylene glycol monobutyl ether | 70 | ― | ― | ― | ― | ― | ― | ― | ― |
| Triethylene glycol monomethyl ether | ― | 100 | ― | ― | ― | ― | ― | ― | ― |
| 2,6-Di-tert-bytyl-p-cresol | 0.10 | 0.10 | ― | ― | ― | ― | ― | ― | ― |
| 2,4-Pentanedione | ― | ― | 0.10 | ― | ― | ― | ― | ― | ― |
| Anthranilamide | ― | ― | ― | 0.68 | ― | ― | ― | ― | - |
| Succinic acid imide | ― | ― | ― | ― | 0.40 | ― | ― | ― | ― |
| Benzimidazole | ― | ― | ― | ― | ― | 0.20 | ― | ― | - |
| Triethanolamine | ― | ― | ― | ― | ― | ― | ― | ― | 0.15 |

For each of samples in Examples 1 to 6 and Comparative example 1 to 3 shown in the Table 1, measurement of electrical conductivity and freezing point and a metal corrosion test were carried out. The results are shown in Table 2. The metal corrosion test was conducted on the basis of the provision of JIS K 2234 7.8, by selecting an cast aluminum test piece (AC-2A) as a metal to be provided to the test in consideration of anti-corrosion properties and a long term use of aluminum based materials, which was immersed singly and heated to 88 °C for 1000 hours under air blowing.

**Table 2**

| Item | | Example 1 | Example 2 | Example 3 | Example 4 | Example 5 | Example 6 | Comparative example 1 | Comparative example 2 | Comparative example 3 |
|---|---|---|---|---|---|---|---|---|---|---|
| Conductivity (µS/Cm) | | 4.6 | 0.03 | 1.5 | 1.8 | 2.2 | 1.5 | 0.93 | 1.2 | 4.4 |
| Metal corrosion test | Weight change in cast aluminum mg/cm² | 0.02 | -0.02 | -0.01 | 0.01 | 0.02 | 0.02 | -0.18 | -0.15 | -0.54 |
| | Conductivity after corrosion test µS/cm | 7.8 | 1.0 | 9.6 | 8.2 | 9.1 | 8.9 | 25.5 | 37.8 | 78.5 |
| Freezing (°C) temperature | | -13 | -44 | -35 | -35 | -35 | -35 | 0 | -35 | -35 |

It is understood from Table 2 that each of compositions in Examples 1 to 6 and Comparative examples 1 to 3 shows a low initial conductivity of 5 µS/cm or less, but that, for conductivity after the 1000-hour metal corrosion test, each of compositions in Comparative examples 1 to 3 exhibits increase in conductivity, that is, 25.5 in Comparative example 1, 37.8 in Comparative example 2 and such a large increase as 78.5 in the case of Comparative example 3. On the contrary, the conductivity of compositions in Examples 1 to 6 remained in a range of from 1.0 to 9.6, that is, it was confirmed that a low conductivity was sustained. Further, as for weight changes (mg/cm²) of the cast aluminum, Comparative examples 1 to 3 showed such large weight changes as -0.18, -0.15 and -0.54. On the contrary, Examples 1 to 6 showed small ones in such a range as -0.02 to +0.02. Thus, it was confirmed that the compositions in Examples have better anti-corrosion properties for aluminum compared with those in Comparative examples. In addition, each composition in Examples 1 to 6 had a freezing point below 0°C.

### Advantage of the Invention

The composition according to the invention comprises a base agent and an anti-corrosive additive that sustains electrical conductivity of the coolant composition to be a low conductivity and, since the anti-corrosive additive is such a substance as suppressing oxidation of the basic agent or blocking ions eluting into a cooling system to prevent conductivity of the coolant composition from increasing, it sustains a low conductivity of the coolant composition over a long period of time and is excellent in anti-freeze properties and anti-corrosion properties.

## Claims

1. A coolant composition for a fuel cell, comprising a base agent and an anti-corrosive additive that maintains the conductivity of the coolant composition sufficiently low, the anti-corrosive additive suppressing oxidation of the base agent or blocking ions eluting into a cooling system to prevent the conductivity of the coolant composition from increasing.

2. The coolant composition for a fuel cell according to claim 1, wherein the base agent is selected from the group consisting of water, glycols, alcohols, glycol ethers and mixtures thereof.

3. The coolant composition for a fuel cell according to claim 2, wherein the glycols are selected from the group consisting of ethylene glycol, diethylene glycol, triethylene glycol, propylene glycol, 1,3-propanediol, 1,3-butanediol, 1,5-pentanediol, hexylene glycol and mixtures thereof.

4. The coolant composition for a fuel cell according to claim 2, wherein the alcohols are selected from the group consisting of methanol, ethanol, propanol, butanol, pentanol, hexanol, heptanol, octanol and mixtures thereof.

5. The coolant composition for a fuel cell according to claim 2, wherein the glycol ethers are selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, tetraethylene glycol monobutyl ether and mixtures thereof.

6. The coolant composition for a fuel cell according to claim 1, wherein the anti-corrosive additive maintains the conductivity of the composition at 10 µS/cm or lower.

7. The coolant composition for a fuel cell according to claim 1, wherein the anti-corrosive additive maintains the conductivity of the composition in the range between 0 and 10 µS/cm.

8. The coolant composition for a fuel cell according to any of claims 1, 6 and 7, wherein the anti-corrosive additive is a phenolic compound.

9. The coolant composition for a fuel cell according to claim 8, wherein the phenolic compound is selected from the group consisting of phenol sulfonic acid, chlorophenol, nitrophenol, bromophenol, aminophenol, dihydroxybenzene, oxin, hydroxyacetophenone, methoxyphenol, 2,6-di-tert-butyl-p-cresol, tert-butyl-4-methoxyphenol, 2,6-di-tert-butyl-4-ethylphenol, 4,4-butylidenebis (3-methyl-6-tert-butyphenol), 2,2-methylenebis (4-methyl-6-tert-butyphenol), 2,2-bis (p-hydroxyphenyl) propane and mixtures thereof.

10. The coolant composition for a fuel cell according to any of claims 1, 6 and 7, wherein the anti-corrosive additive is selected fromthe group consisting of hydrocarbon carbonyl compound, amide compound, imide compound and diazole compound.

11. The coolant composition for a fuel cell according to claim 10, wherein the hydrocarbon carbonyl compound is selected from the group consisting of 2,4-pentanedione, 3-methyl-2,4-pentanedione, 3-ethyl-2,4-pentanedione, 3-propyl-2,4-pentanedione, 3-n-butyl-2,4-pentanedione, 2,3-heptanedione, 2,5-hexanedione, phthalic aldehyde, benzaldehyde, dihydroxybenzaldehyde, pentanone, 2-acetylcyclopentanone, cyclohexanone, cyclohexanedione, 2,2,6,6-tetramethyl-3,5-heptanedione and mixtures thereof.

12. The coolant composition for a fuel cell according to claim 10, wherein the amide compound is selected from the group consisting of benzamide, methylbenzamide, nicotinic acid amide, picolic acid amide, anthranilamide, succinic acid amide, oxalic acid diamide, acetamide, 2-pyrrolidone, caprolactam and mixtures thereof.

13. The coolant composition for a fuel cell according to claim 10, wherein the imide compound is selected from the group consisting of succinic acid imide, phthalic acid imide, maleic acid imide, glutaric acid imide, 1,8-naphthalimide, alloxane, purpuric acid and mixtures thereof.

14. The coolant composition for a fuel cell according to claim 10, wherein the diazole compound is selected from the group consisting of imidazoline, 1,3-diazole, mercaptoimidazoline, mercaptoimidazole, benzimidazole, mercaptobenzimidazole, methylimidazole, dimethylimidazole, imidazole4,5-dicarboxylic acid, 1,2-diazole, methylpyrazole and mixtures thereof.
